# EUROPEAN PATENT APPLICATION

(11) **EP 4 403 009 A1**
(43) Date of publication of application: **24.07.2024**
(21) Application number: 24153010.4
(22) Date of filing: 19.01.2024
(51) Int. Cl.: A01B 69/00, A01B 69/04

(54) **SYSTEM AND METHOD FOR OPERATING AN AUTONOMOUS WORK VEHICLE USING A SAFETY CONTROL SYSTEM**

(30) Priority: 20.01.2023 US 202318099729
(71) Applicant: CNH Industrial America LLC, New Holland, PA 17557 (US); CNH Industrial Italia S.p.A., 10156 Torino (IT)
(72) Inventor: FERRARI, Luca, New Holland, 17557 (US); HUNT, Timothy Scott, New Holland, 17557 (US)
(74) Representative: Keltie LLP

(57) **Abstract**

In one aspect, a system for detecting and addressing an unsafe working condition may include a work vehicle (12) structured to operate over a work surface. The system can also include a proximity sensor (34) mounted to the work vehicle and structured to generate a proximity sensor signal indicative of a presence of an obstacle within a dynamic zone of operation of the work vehicle. The system may also include a safety control system (38) configured to receive the proximity sensor signal and execute a safety action based upon the proximity sensor signal, wherein the safety system is further configured to adjust the dynamic zone of operation based upon an object detection confidence measure.

## Description

### FIELD OF THE INVENTION

The present disclosure generally relates to agricultural implements and, more particularly, to systems and methods for safe operation of autonomous work vehicles and implements.

### BACKGROUND OF THE INVENTION

It is well known that operation of autonomous farm and other work vehicles will often occur when people or other objects/obstacles are present. The objects or other obstacles may often remain fixed in place as the autonomous work vehicle conducts operations but sometimes the objects or obstacles can also either move on their own or move in relation to the work vehicle. Relative movement of the objects or obstacles can occur along predictable trajectories but may also be unpredictable.

During autonomous operations, the work vehicle may not include a supervisory human operator that can ensure safety of people that may be around the work vehicle. Furthermore, even in those instances in which a supervisory human operator is present, the operator may not have full knowledge of the operating area around the work vehicle.

Accordingly, an improved system and method for safely operating a work vehicle and implement would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to a system for detecting and addressing an unsafe working condition. The system may include a work vehicle structured to operate over a work surface. The system may also include a proximity sensor mounted to the work vehicle and structured to generate a proximity sensor signal indicative of a presence of an obstacle within a dynamic zone of operation of the work vehicle. Furthermore, the system may also include a safety control system configured to receive the proximity sensor signal and execute a safety action based upon the proximity sensor signal. The safety system is further configured to adjust the dynamic zone of operation based upon an object detection confidence measure.

In another aspect, the present subject matter is directed to a work vehicle safety system. The work vehicle safety system may include a work vehicle having a prime mover and adapted to tow an agricultural implement. The work vehicle safety system may also include a proximity sensor structured to generate a proximity sensor signal indicative of an intrusion of an obstacle into a dynamic zone of operation of the work vehicle. Furthermore, the work vehicle safety system may also include a safety control system configured to receive the proximity sensor signal and initiate a safety action based upon the proximity sensor signal, the safety control system further configured to adjust the dynamic zone of operation of the work vehicle using an object detection confidence measure.

In a further aspect, the present subject matter is directed to for operating a work vehicle in the presence of obstacles. The method may include moving a work vehicle over a work surface. The method may further include generating a proximity sensor signal from a proximity sensor, the proximity sensor signal indicating the presence of an obstacle within a dynamic zone of operation of the work vehicle. Furthermore, the method may include initiating a safety action based upon the proximity sensor signal. Still further the method may include adjusting the dynamic zone of operation of the work vehicle based upon an object detection confidence measure characterizing an operating state of the work vehicle.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a perspective view of one embodiment of an agricultural implement coupled to a work vehicle in accordance with aspects of the present subject matter;
FIG. 2 illustrates the depiction of zones of operation into which obstacles/objects may intrude and which impact operation of the work vehicle in accordance with aspects of the present application;
FIG. 3 illustrates a view of a computing device which can be used in several devices/systems such as a proximity sensor, data hub, and safety control system in accordance with aspects of the present application; and
FIG. 4 illustrates a flow diagram of one embodiment of a method for operating a work vehicle in the presence of obstacles in accordance with aspects of the present subject matter.

Repeat use of reference characters in the present specification and drawings is intended to represent the same or analogous features or elements of the present technology.

### DETAILED DESCRIPTION OF THE DRAWINGS

In general, the present subject matter is directed to systems and methods for operating a work vehicle and/or implement when obstacles, or objects, are detected and in which the work vehicle can be autonomous. In several embodiments, a proximity sensor can be used to generate a proximity sensor signal that includes information that indicates the presence of an object, such as a person. The proximity sensor signal can be communicated from the proximity sensor to a data hub for further processing and/or for communication onward to a safety control system. The safety control signal can evaluate the proximity sensor signal and determine whether an autonomous operation of the work vehicle is impacted. In accordance with aspects of the present subject matter, the safety control system can monitor the detected object relative to zones of operation around the work vehicle and/or implement. If an object is detected, the safety control system can alter a zone of operation so that, in some forms, the autonomous work vehicle operates more safely if the object is detected. For example, if a person is detected the work vehicle can make a zone of operation bigger such that safety actions are taken if the person approaches too closely to the work vehicle and/or implement. A larger zone of operation indicates a more conservative operation of the work vehicle. The zone of operation can include a large warning zone and a smaller hazard zone. If an object eventually intrudes into the warning zone, an advisory signal can be sent by the safety control system, such as an audible or visual warning. If the object intrudes further into the hazard zone, then the safety control system can alter an operation of the work vehicle, including changing power of an engine or shutting down the engine entirely.

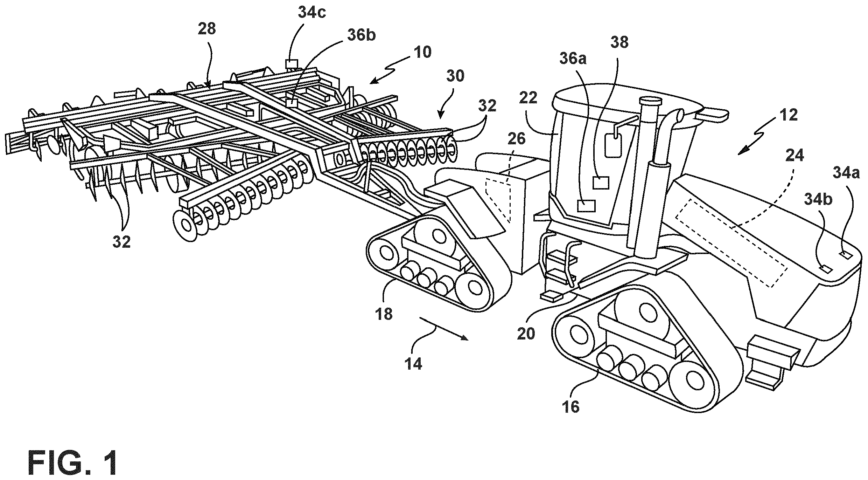

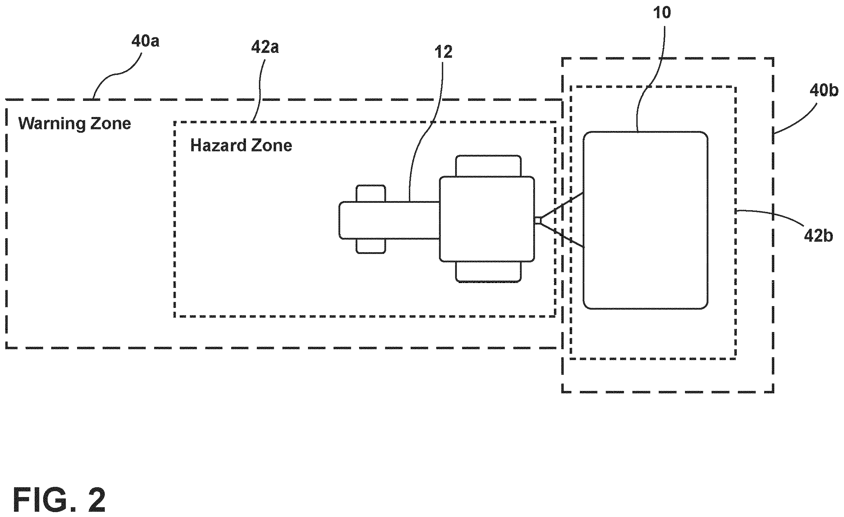

Referring now to drawings, FIGS. 1 and 2 illustrate various views of one embodiment of an agricultural machine in accordance with aspects of the present subject matter. As shown, in the illustrated embodiment, an agricultural machine is configured to include either or both of an agricultural work vehicle 12 (sometimes referred to herein as a `work vehicle' or simply 'vehicle' for ease of reference) and an agricultural implement 10 (sometimes referred to herein as an 'implement' for ease of reference) coupled to the vehicle 12.

FIG. 1 illustrates a perspective view of one embodiment of the agricultural implement 10 coupled to the work vehicle 12. In general, the implement 10 in FIG. 1 may be configured to be towed across a field (or other appropriate work surface) in a direction of travel by the work vehicle 12 for example in the direction as indicated by arrow 14 in FIG. 1. As shown, the implement 10 may be configured as a tillage implement, and the work vehicle 12 may be configured as an agricultural tractor. However, in other embodiments, the implement 10 may be configured as any other suitable type of implement, such as a seed-planting implement, a fertilizer-dispensing implement, and/or the like. As such, the implement can be a front-mounted implement, mid-mounted implement, or a rear-mounted implement. In such embodiments, the work vehicle 12 is configured to convey the implement across the field (e.g., the rear-mounted implement is 'towed' across a field). Similarly, the work vehicle 12 may be configured as any other suitable type of vehicle, such as an agricultural harvester, a self-propelled sprayer, and/or the like.

As shown in FIG. 1, the work vehicle 12 may include a pair of front track assemblies 16, a pair or rear track assemblies 18, and a frame or chassis 20 coupled to and supported by the track assemblies 16, 18. The work vehicle 12 may include an engine 24 and a transmission 26 mounted on the chassis 20. In some forms the engine 24 may be an internal combustion engine or other prime mover such as a hybrid engine. In applications requiring a transmission, the transmission 26 may be operably coupled to the engine 24 and may provide variably adjusted gear ratios for transferring engine power to the track assemblies 16, 18 via a drive axle assembly (not shown) (or via axles if multiple drive axles are employed).

Also as shown in FIG. 1, the implement 10 may include a frame 28. In several embodiments, the frame 28 may be configured to support one or more gangs or sets 30 of disc blades 32. Each disc blades 32 may, in turn, be configured to penetrate into or otherwise engage the soil as the implement 10 is being pulled through the field. In this regard, the various disc gangs 30 may be oriented at an angle relative to the direction of travel 14 to promote more effective tilling of the soil.

An operator's cab 22 may be supported by a portion of the chassis 20 and may house various input devices for permitting an operator to control the operation of one or more components of the work vehicle 12 and/or one or more components of the implement 10. In some forms the work vehicle 12 may lack an operator's cab 22 such as embodiments in which the work vehicle is completely autonomous and lacking in operator interfaces. The work vehicle 12 can be a fully autonomous or semi-autonomous vehicle which, in some forms, can still include operator interfaces capable of overriding autonomous system operation.

The work vehicle 12 and/or implement 10 includes one or more proximity sensors 34a, 34b, and 34c which are structured to communicate data to one or more data hubs 36a and 36b. The proximity sensors are structured to generate information useful to assess the environment around the work vehicle 12 and/or implement 10, including the type of terrain and also any objects that appear in or on the terrain that may be of danger to operation of the work vehicle 12 and/or implement 10. For example, the proximity sensors 34 (the bare numeral 34 without an alphabetic suffix refers generally to any or all of the proximity sensors 34a, 34b, and 34c) can be used to detect whether a person has entered into proximity with any part of the work vehicle 12 and/or implement 10. The detection of the object can occur in the proximity sensor 34 (such as a sensor that includes on-board, or edge, processing), or can occur in the data hub 36 (the bare numeral 36 without an alphabetic suffix refers generally to any or all of the data hub 36a and 36b). Such proximity detection can include an identification of the object (e.g., an identification that the object is a person) and/or the range to or location of the object from any part of the work vehicle 12 and/or implement 10. As will be appreciated from the discussion herein, the data hub 36 is capable of receiving and passing along information but can also receive and process data prior to passing such processing along to another device.

Although the work vehicle 12 is depicted as including two proximity sensors 34a and 34b, other embodiments can include fewer or more proximity sensors. Likewise, although the implement 10 includes just a single proximity sensor 34c, other embodiments can include additional proximity sensors.

The proximity sensors 34 can take any variety of forms useful to detect the proximity of an object intruding into an operating space of the work vehicle 12 and/or implement 10. The proximity sensors 34 are structured to capture an image scene which includes an area in proximity to the work vehicle 12 and/or implement frame 10, and then to generate a proximity sensor signal representing the image scene. The proximity sensor signal can include a transmission from the proximity sensor 34 of the raw data of scene information as sensed in the sensor, it can include a transmission that includes calculated data related to the raw data, and/or can also include a representation of the data whether calculated or raw residing in a computing device associated with the proximity sensor 34 or a device, such as the data hub, that receives the data from the sensor 34.

In one embodiment, the proximity sensor 34 can take the form of a camera. Camera can be 2-D or 3-D. The camera can capture images in a variety of wavelengths, including visible wavelengths, near infrared, and infrared. The cameras can also capture images at a variety of resolutions. In some forms, the cameras can capture still images while in others the cameras can capture moving images at a variety of frame rates. In short, the camera can take on a variety of forms.

Further to the above, the camera proximity sensor is capable of generating image data that can be operated upon by the camera proximity sensor and transmitted to other devices, or the raw data can be transmitted to other devices using any suitable type of communication, such as through wired or wireless communication, where further data reduction can take place. Examples of data reduction of the raw data include detecting objects within the image data (so called "object detection") as well as a detection confidence. A detection confidence is a metric provided as a consequence of detecting an object that measures the confidence by which the object is detected. For example, if the object detection from camera image data results in an identification that the object is a person, an object detection confidence can also be provided to estimate the confidence by which the object detection algorithm has identified the object as a person. An output of the object detection, therefore, can include an identification within the image of an object (e.g., a bounding box and/or mask), the type of object, and a detection confidence of the type of object. Whether the raw data is processed at the camera and communicated to other devices for processing therein (e.g., an appropriate data hub 36), or the raw data is passed to other devices for further computation, such data reduction of the image into useful information (e.g., identification within the image of an object, type of object, and confidence of detection) will be described further below. In some embodiments, a range to or location of the object in the image may also be calculated.

In another embodiment, the proximity sensor can take the form of a light detection and ranging (LiDAR) system capable of generating point cloud data useful in providing ranging or distance information to points or objects with the dataset. The LiDAR can have any variety of resolution, frame rates, and viewing angles. It will be appreciated that the point cloud information can be communicated to other devices (e.g., an appropriate data hub 36) whereupon further computations can be performed, or information related to the point cloud can be operated upon further by the LiDAR system. The data from the LiDAR system can be communicated through any suitable techniques, including wired or wireless communication.

Similar to image data collected from camera proximity sensors, data collected from the LiDAR system can be further processed by detecting objects in the point cloud data. Further, object detection techniques as applied to point cloud data can also include an identification within the point cloud data of an object, identification of the type of object, and a confidence of detection. If the object detection from LiDAR data results in an identification that the object is a person, an object detection confidence can also be provided to estimate the confidence by which the object detection algorithm has identified the object as a person. Such information can be included in the output signal of LiDAR provided to the data hub 36. Signals provided by the LiDAR to the data hub 36 can include raw data or processed data, and in many instances will include a point cloud output. Processing beyond the point cloud (e.g., object detection yielding a measure of confidence of object detection) can take place in other devices such as, but not limited to, the data hub 36.

In yet another embodiment the proximity sensor can take the form of radar capable of detecting radar objects and tracking the objects through time. Any given embodiment of the radar is structured to provide any number of functions and measures, including tracking of objects, distance to or location of objects in a radar frame of reference, Doppler speed, object identification, and a confidence of object identification. The data from the radar can be communicated through any suitable technique including wired or wireless communication to any other device (e.g., a suitable data hub 36).

In still yet another embodiment, the proximity sensor can take the form of an ultrasonic sensor (or, in some forms, an array of ultrasonic sensors). The ultrasonic sensor can be used as a ranging device, where an object placed in proximity to the ultrasonic sensor can be sensed and a signal generated representing the distance to the object from the ultrasonic sensor.

Some proximity sensors can be fused together to form fused proximity data which can include information from one or more proximity sensors. For example, data from both a camera proximity sensor and a LiDAR proximity sensor can be fused together in which data from the camera can be used to identify an object, a confidence of detection can be provided of the object using data from the camera, and ranging and/or location information can be provided using data from the LiDAR system. Calibrating image data coordinate system to LiDAR coordinate system can be performed using standard techniques in the art. The fusion of the separate proximity sensors can be performed by the data hub 36 or another system (such as a safety control system mentioned further below).

In any given application of work vehicle 12 and/or implement 10, the proximity sensor(s) 34 used can all take the same types/forms (e.g., all proximity sensors can be RGB cameras), while in other applications the proximity sensor(s) can take on a mix of types/forms. In one non-limiting example, a work vehicle 12 can include a radar and camera while the implement 10 includes a LiDAR system. In another application, the work vehicle 12 may include only a single radar and the implement 10 includes no proximity sensor. In yet another embodiment, the work vehicle 12 can include a LiDAR system as its proximity sensor and the implement 10 includes two cameras. In short, any mix of types/forms and any number of proximity sensors 34 can be used on either or both of the work vehicle 12 and the implement 10 to assist in identifying an object in proximity to the work vehicle 12 and/or implement 10, a confidence of the identification of the object, and a distance to or location of the object to either or both of the work vehicle 12 and implement 10.

The proximity sensors 34 are structured to capture data and communicate the data to the appropriate data hub 36 through either wired or wireless communication with the data hub 36. The data hub 36 can be a local computing device useful to process data collected from the sensors and generate a data indicative of the type and range of object detected. In any given application of work vehicle 12 and/or implement 10, the proximity sensors 34 can all be configured to communicate by either wired or wireless communication, but in other applications some proximity sensors 34 may communicate by wired techniques while other proximity sensors 34 may communicate through wireless techniques.

Though each of the work vehicle 12 and implement 10 are illustrated as including a data hub 36, in some forms only a single data hub 36 may be present on the combined work vehicle 12 and implement 10. In such cases, the proximity sensors 34 may still be configurable to communicate data through wired or wireless communication. In still other forms, several data hubs 36 may be used on either of the work vehicle 12 and/or implement 10.

As will be appreciated from the discussion above, any of the data hubs 36 can communicate data to any number of destinations, including a designated data hub 36 that aggregates all information, and/or to a cloud computing center, and/or to another digital destination such as, but not limited to, a display. The data communicated by the proximity sensors 34 can be the raw data collected by the various sensors 34, a computed value of the data collected from the various sensors 34, or any number of other actions dictated from computation of the data, such as issuing a control action, or an operating alert, etc., as will be described further below.

The work vehicle 12 also includes a safety control system 38 which is in communication with the data hub 36 and is used to evaluate information from the data hub 36 related to the proximity sensors 34 and modulate operation of the work vehicle 12. In general, the safety control system 38 is structured to monitor the surroundings of the work vehicle 12 and/or implement 10 based upon data collected from the proximity sensors 34 and directly or indirectly adjust the operation of the work vehicle. In particular, the safety control system 38 determines if an object is within a zone of operation of the work vehicle 12 and/or implement 10 and performs a safety action, such as, but not limited to, issuing control signals to one or more components of the work vehicle 12 (e.g., the prime mover 24) and/or generating advisory signals to be displayed to a supervisory operator so that safety related actions can be taken.

To determine whether an object is within a zone of the work vehicle requires that a position of the object be known relative to the work vehicle 12 and/or implement 10. As stated above, the safety control system 38 receives data sent from the data hub(s) 36 based on data received from the proximity sensor(s) 34. In one form, the safety control system 38 receives data in the form of a proximity sensor signal which represents a data set formed by processing raw data collected by the proximity sensor(s) 34 either at the sensor(s) 34 or the data hub 36. The processed data that is included in the proximity sensor signal can include an object identification, a confidence of an object identification, and a range to and/or location of the object to the work vehicle 12 and/or implement 10. If location is included in the proximity sensor signal, such location can be expressed in a coordinate frame useful to the safety control system 38 or can be converted to such by the safety control system 38. In one form the range estimate sent in the proximity sensor signal by the data hub 36 to the safety control system 38 can be a range calculated to the proximity sensor 34 that calculated it. In still further additional and/or alternative forms, the data hub 36 can send in the proximity sensor signal a calculated range and azimuth of the object as measured from the proximity sensor 34.

In one form, the range of the object can be a shortest line distance between the detected object and a portion of the work vehicle 12 and/or implement 10, but in other embodiments the range can be the range of the object from a portion of the vehicle most likely to strike the object if the work vehicle 12 and/or implement 10 continues in the current direction. As such, range information can be calculated either at the data hub 36 or safety control system 38 as a function of trajectory of the vehicle 12 and/or implement 10. Physics-based kinematics modelling can be used in one or both of the data hub 36 and safety control system 38 to determine a range.

It will be appreciated that the proximity sensor signal can include raw data from one or more sensors 34, it can include data that is processed at either the proximity sensor 34 or a data hub(s) 36, or a mix of these data streams. At a minimum, the proximity sensor signal sent to the safety control system 38 includes information that indicates the proximity of an obstacle to the work vehicle 12 and/or implement 10, whether the data is explicitly expressed in the proximity sensor signal or can be derived from the proximity sensor signal. Such proximity can therefore be expressed as a distance to the work vehicle 12 and/or implement 10 (whether it is a shortest line distance, a distance along a potential impact trajectory, etc.) which can be used to evaluate whether the object is in a relevant zone of operation of the work vehicle 12 and/or implement 10 such that issue control actions or advisory signals are to be taken by the safety control system 38.

In one embodiment, a safety control system 38 used to monitor the zone of operation around the work vehicle 12 and/or implement 10 includes two separate zones: a hazard zone and a warning zone. Other embodiments may include fewer or greater number of zones. As used herein, a warning zone is an area where, if no action is taken by the vehicle 12 and/or implement 10, then an obstacle detected by one or more proximity sensors 34 might enter the hazard zone. A hazard zone is considered an area which is typically smaller than the warning zone and is one in which if a detected obstacle enters the area, then potential for injury exists due to movement of the work vehicle 12 and/or implement 10.

FIG. 2 depicts one embodiment of a zone of operation around the work vehicle 12 and/or implement 10 in which the zone of operation includes warning zones 40a and 40b along with hazard zones 42a and 42b for both the vehicle 12 and implement 10. The warning zones 40a and 40b and hazard zones 42a and 42b are demarcations determined by the safety control system 38, and which demarcations can be preconfigured in the safety control system 38 to take on any variety of configurations (e.g., shape, size, symmetry, etc.). In some forms, the safety control system 38 can communicate with other devices capable of providing an update to parameters the safety control system 38 uses to determine the configuration of the demarcations. For example, the safety control system 38 can be in communication with a base station that provides updates to the parameters that set the configuration of the demarcations. Such a base station can be controlled by, for example, a safety supervisor that interacts with the base station to select/load/program/etc. the parameters which are then communicated as updates to the parameters in the safety control system 38.

The safety control system 38 can be configured with any number of parameters useful to define the boundaries, or demarcation, of the zone of operation of the work vehicle 12 and/or implement 10. For example, the illustrated embodiment in FIG. 2 includes boundaries at the edges of the rectilinear shaped two dimensional boxes shown in warning zones 40 and hazard zones 42 (use of reference numerals 40 and 42 cited herein without an alphabetic suffix (e.g., without the suffix 'a' in `42a') will be understood to refer to any one or more of the different numerals 40a, 40b, 42a, and 42b; use of the abbreviated numerals 40 and 42 are used for brevity purposes only and are furthermore used without limitation unless expressly stated to the contrary). The straight edge boundaries in the illustrated embodiment can be defined by a parameter referenced in the safety control system 38 which dictates an offset of the boundary from a portion, or edge, or object, etc. of the work vehicle 12 and/or implement 10. The safety control system 38 can use the parameter that dictates the placement of the boundary as it also observes the object through the proximity sensor signal received from the data hub 36. If, upon evaluation of information in the proximity sensor signal in comparison to the boundary set by the parameter that an object is present somewhere in the view and/or intrudes into the zone, the safety control system 38 can alter an operation of the work vehicle 12 and/or implement 10 and/or send an advisory signal.

The parameters referenced by the safety control system 38 to set the boundaries of the zones of operation 40 and 42 can take on a variety of forms. For example, the parameters can be a set of independent variables each associated with a particular side of the rectilinear zone depicted in FIG. 2. The parameters can be expressed as a function, such as a velocity of the vehicle, or weather condition, surface condition, or type of object, or confidence of identification of the object. Such function can be evaluated by the safety control system 38 to set the boundary. Additionally and/or alternatively, the parameters can be used to set a boundary that is not rectilinear. For example, the parameters can be used to set a circular boundary in which case the parameters may be reduced to a radial distance from a centroid, for example. Additionally and/or alternatively, the parameters can also be tied to a computer aided design (CAD) model of the vehicle 12 and/or implement 10. In short, the parameters can take on any form (single variables defining edges or other characteristics of a defined shape, a function based on other variables) which are used by the safety control system 38 to define any shape (rectilinear, circular, etc.) where the resultant boundaries can be static or dynamic.

Several additional variations of the parameters and/or boundaries are also contemplated herein. As suggested above, the boundaries can be two dimensional (2D) in some forms and three dimensional (3D) in others. In still further forms, portions of the boundaries can be expressed as 3D while other portions can be expressed as 2D. Additionally and/or alternatively, although the boundaries depicted in FIG. 2 are closed in that the work vehicle 12 and/or implement 10 are enclosed, in some forms one or more portions of the boundaries may be open. For example, a rear boundary of the work vehicle 12 may be open when the implement 10 is attached. In another form, a rear boundary of the work vehicle 12 may be open ended if a motion of travel of the work vehicle 12 makes it impossible or highly unlikely that a person or other object could intrude from that direction. Such open-ended boundaries can aid in reducing computational processing. Additionally and/or alternatively, the boundaries may be present on one of the work vehicle 12 and implement 10, but not the other. Still further, additionally and/or alternatively, the boundaries can result in a symmetric shape to the zones 40 or 42 in some forms (e.g., the illustrated forms in FIG. 2) while in other forms the boundaries may result in an asymmetric shape to the zones 40 or 42. Yet still further, one portion of the boundaries of one or more of the operating zones can include a dynamic portion (e.g. the front of the work vehicle 12 includes one boundary that changes as a function of the speed of the work vehicle 12) while other boundaries of the zone remain static. In those embodiments having dynamic boundaries, such boundaries can change in increments in one form while in other forms the boundaries can change proportional to the proximity of the obstacle or other variable.

To further elaborate on details provided above, the safety control system 38 can update one or more parameters to change one or more boundaries of one or more zones based on an operating condition of the work vehicle 12 and based on the proximity sensor signal provided from the data hub 36. The proximity sensor signal can represent a fused sensor output such as might be available when combining information from a camera proximity sensor with that of a radar proximity sensor. The proximity sensor signal may include if identification of an object, location of the object, and confidence of detection of the object. The safety control system 38 can update parameters that set the boundaries of one or more of the operating zones 40 and 42 based upon the proximity sensor signal. If the object detected is a human and the confidence meets or exceeds a confidence threshold, a parameter can be set to adjust the boundary in light of the confidence of detection of a person.

In some examples, the safety control system 38 can update the parameters that set the boundaries of one or more of the operating zones 40 and 42 by enlarging the boundaries if the object is detected with high confidence of being a person. In other examples, control system 38 can update the parameters that set the boundaries of one or more of the operating zones 40 and 42 by enlarging the boundaries further still if the object is indeterminate. For example, if the object detection is able to detect a range of objects, from people to trees to fences and more, if the object detection cannot classify the object then a large safety zone may be created. In still other examples, the control system 38 can update the parameters that set the boundaries of one or more of the operating zones 40 and 42 by enlarging the boundaries further still based on a determination that a trajectory of a person is directed toward the operating zones 40 and 42. Likewise, the control system 38 can update the parameters that set the boundaries of one or more of the operating zones 40 and 42 by collapsing the boundaries to a smaller size based on a determination that a trajectory of a person is directed away from the operating zones 40 and 42. In still other examples, the control system 38 can update the parameters that set the boundaries of one or more of the operating zones 40 and 42 by enlarging the boundaries based on a determination whether the work vehicle 12 and/or implement 10 is operating near a house, town, or other settlement. Likewise, the control system 38 can update the parameters that set the boundaries of one or more of the operating zones 40 and 42 by collapsing the boundaries to a smaller size based on a determination whether the work vehicle 12 and/or implement 10 is operating in an open field.

Other confidence measures can also be used to change the boundaries of the zones of operation 40 and/or 42. If the weather conditions result in a muddy field in which traction, control, and stopping distance may be impacted, or foggy/rainy conditions impair the ability to use one or more proximity sensors, the safety control system 38 can further change the parameters used to set the boundaries so as to provide a greater safety zone for operations around an object detected with a confidence as a person (i.e., the object detected met or exceeded a threshold as indicating a person). The parameters setting the boundaries, furthermore, can be adjusted as a function of both the confidence level of the object identification and as a function of confidence in operation of the work vehicle 12 and/or implement 10 in the weather conditions. It will be appreciated that vehicle operation, such as the speed of vehicle, can also be viewed together with, or separate from, the weather conditions. Accordingly, the confidence of operating the work vehicle 12 and/or implement 10 in any weather condition be it gentle or adverse weather conditions and/or vehicle speed can also be termed an environmental confidence measure.

Still other confidence measures can also be used to change the boundaries of the zones of operation 40 and 42. If the data collection of proximity sensors 34, and/or the data reduction by the data hub 36 or safety control system 38, and/or communication of data anywhere in the chain of communication is known to impact the quality and/or speed of data processed by the safety control system 38, further changes to the parameters setting the boundaries of the operating zones 40 and 42 can be made. For example, if some aspects of communicating data and/or processing the data impacts a data latency, then a confidence can be assigned to such impacts. In some embodiments, it is possible to measure and/or estimate such latency, resolution, accuracy, etc. in advance of deployment to the field, where such estimates or measures are capable of being expressed as a function of operating condition of the work vehicle 12 and/or implement 10. Such confidence of operating the sensing, computing, and communications of work vehicle 12 and/or implement 10 as described above can also be termed as a system confidence measure. A confidence measure can be correspondingly expressed as a function of the operating conditions. The confidence measure can therefore be used to set the parameters used to define the boundaries of the zones of operation 40 and/or 42.

As suggested above, boundaries of the operating zones 40 and 42 can be adjusted based upon a confidence of operating the work vehicle 12 in the presence of varying surface conditions (e.g. muddy field), or a confidence of operating the work vehicle 12 in varying weather conditions (e.g. is it foggy/rainy and sensors have difficult time ascertaining objects and ranges), and/or a confidence of operating the vehicle as a function of an operating state of the work vehicle 12 (how fast is the work vehicle 12 and implement 10 travelling, is the work vehicle 12 turning, etc.). Still further, if the data collection of proximity sensors 34, data reduction by the data hub 36 and/or safety control system 38, and communication of data anywhere in the chain of communication is known to impact the quality and/or speed of data processed by the safety control system 38, further changes to the parameters setting the boundaries of the operating zones 40 and 42 can be made. Any three of the confidence in object detection, environmental confidence measure, or system confidence measure listed above can be used independently to set the boundaries or can be used together with one or more of the others. Such confidence measures can be compared against a corresponding threshold or set of thresholds which can then be used to determine the appropriate change to parameter(s) used to set the boundaries of the zones of operation 40 and/or 42.

In general, and with reference to the discussion above, the boundaries of the zones of operation 40 and/or 42 can be adjusted based upon the detection of an object, the confidence of object detection, and proximity of object to the zones of operation and/or the work vehicle 12 and/or implement 10. Such information can be provided by one or more proximity sensors and/or one or more fused proximity sensors (data that is combined from two or more proximity sensors).

Operationally, and as suggested above, when the safety control system 38 detects an object outside of a zone of operation 40 and/or 42 or detects other events such as a muddy field, changes to the parameters used to set the boundaries of the zones can be made. In likewise fashion, when an object enters a zone of operation, the safety control system 38 can adjust the operation of the work vehicle 12 and/or implement 10 through safety actions, such as issuing control signals to one or more components of the work vehicle 12 (e.g., the prime mover 24) and/or generating advisory signals to be displayed to a supervisory operator so that safety related actions can be taken.

If an object, such as a person, enters the warning zone 40, an advisory action can be generated by the safety control system 38. An advisory action such, as a signal useful to generate an audible warning or a visual display, can be generated by the safety control system 38. The advisory signal can be used to operate an appropriate audible device or display connected directly to the safety control system 38. In some embodiments, however, the advisory signal can be communicated through wired or wireless techniques to another device or devices suitable to generate either or both of the audible warning or visual display. In some forms, the work vehicle 12 and/or implement 10 can include a horn and/or flashing light which can be activated to alert a person that they have encroached into a warning zone 40 of the work vehicle 12 and/or implement 10.

If an object, such as a person, enters the hazard zone 42, the safety control system 38 can generate a signal useful to change an operating state of the work vehicle 12 and/or implement 10. For example, the safety control system 38 can send a signal to alter a power of the prime mover 24. The power signal can be issued by the safety control system 38 to the prime mover 24 to change a power setting or cut power entirely in some embodiments. The signal can be sent directly from the safety control system 38 to the prime mover 24, or can be communicated using wired or wireless techniques to another device suitable to alter the power output of the prime mover 24.

It should be appreciated that the configuration of the work vehicle 12 and/or implement 10 using proximity sensors 34, data hub 36, and safety control system 38 described above and shown in FIGS. 1 and 2 are provided only to place the present subject matter in an exemplary field of use. Thus, it should be appreciated that the present subject matter may be readily adaptable to any manner of implement configuration beyond that described above.

It will be appreciated that several devices and/or systems of the present application can take the form of a computing device. For example, a proximity sensor 34, such as a LiDAR, can have one or more computing devices embedded within useful to capture and generate useful information. Likewise, any of the data hub 36 and safety control system 38 can also take the form of a computing device.

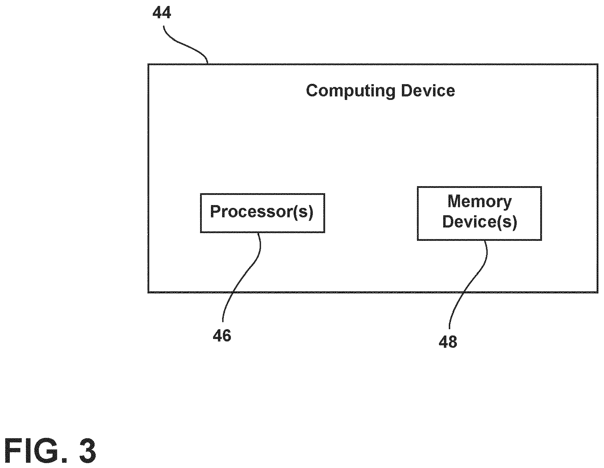

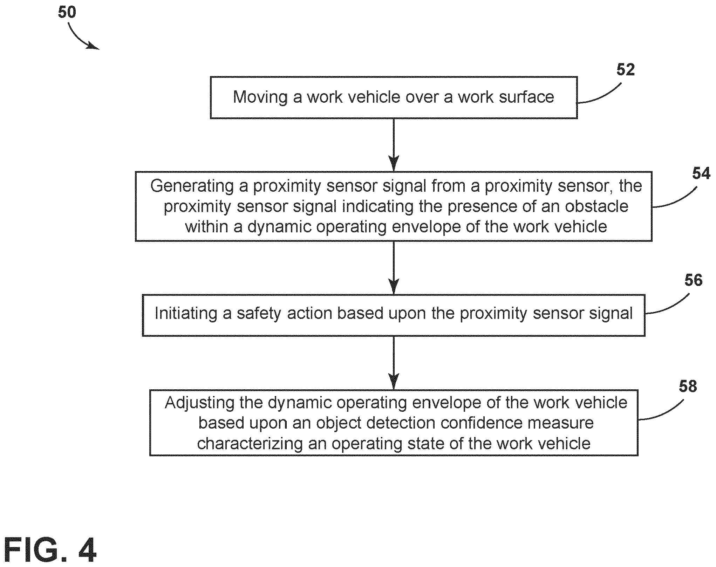

FIG. 3 depicts a computing device useful to carry out the activities and functions for devices/systems herein, such as the proximity sensors 34, data hub 36, and safety control system 38. In general, such a computing device suitable for use herein may comprise any suitable processor-based device known in the art. Furthermore, the activities or functions of any given device/system, such as the proximity sensors 34, data hub 36, and safety control system 38, can be accomplished by one or more computing devices. A computing device 44 is depicted in FIG. 3 and may include one or more processor(s) 46 and associated memory device(s) 48 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 48 of the computing device 44 may generally comprise memory element(s) including, but not limited to, a computer readable medium (e.g., random access memory (RAM)), a computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 48 may generally be configured to store suitable computer-readable instructions that, when implemented by the processor(s) 46, configure the computing device 44 to perform various computer-implemented functions, such as one or more aspects of the method 50 described below with reference to FIG. 4. In addition, the computing device 44 may also include various other suitable components, such as a communications circuit or module, one or more input/output channels, a data/control bus and/or the like.

It should be appreciated that the computing 44 device of any of the suitable devices/systems (e.g., proximity sensor 34, data hub 36, safety control system 38) may correspond to an existing computing device of the work vehicle 12 and/or implement 10, or the computing device 44 may correspond to a separate processing device. For instance, in one embodiment, any of the devices/systems described herein that can take the form of a computing device may form all or part of a separate plug-in module that may be installed within the work vehicle 12 and/or implement 10 to allow for the disclosed system and method to be implemented without requiring additional software to be uploaded onto existing devices of the work vehicle 12 and/or implement 10.

Furthermore, in one embodiment, the safety control system 38 may also include a user interface useful to execute the advisory signals discussed above. More specifically, the user interface may be configured to provide feedback (e.g., notifications associated with intrusion of an obstacle into any zone of operation 40 and 42) to the operator of the implement 10. As such, the user interface may include one or more feedback devices (not shown), such as display screens, speakers, warning lights, and/or the like, which are configured to communicate such feedback. In addition, some embodiments of the user interface may include one or more input devices, such as touchscreens, keypads, touchpads, knobs, buttons, sliders, switches, mice, microphones, and/or the like, which are configured to receive user inputs from the operator. In one embodiment, the user interface may be positioned within the cab of the work vehicle 12. However, in alternative embodiments, the user interface may have any suitable configuration and/or be positioned in any other suitable location.

Referring now to FIG. 4, a flow diagram of one embodiment of a method 50 for operating a work vehicle, detecting the presence of an object/obstacle within a zone of operation of the work vehicle, initiating a safety action based upon the sensor signal, and adjusting a zone of operation of the vehicle. In general, the method 50 will be described herein with reference to the agricultural implement 10, the work vehicle 12, and the system described above with reference to FIGS. 1-3. However, it should be appreciated by those of ordinary skill in the art that the disclosed method 50 may generally be implemented with any agricultural implement having any suitable implement configuration, any work vehicle having any suitable vehicle configuration, and/or any system having any suitable system configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 4, at step 52, the method 50 may include moving a work vehicle over a work surface. At step 54, the method 50 may also provide generating a proximity sensor signal from a proximity sensor, the proximity sensor signal indicating the presence of an obstacle within a dynamic zone of operation of the work vehicle. At step 56, the method can further include initiating a safety action based upon the proximity sensor signal. The method 50 can also include adjusting the dynamic zone of operation of the work vehicle based upon an object detection confidence measure characterizing an operating state of the work vehicle.

It is to be understood that the steps of the method 50 can be performed by a computing system upon loading and executing software code or instructions which are tangibly stored on a tangible computer readable medium, such as on a magnetic medium, e.g., a computer hard drive, an optical medium, e.g., an optical disc, a solid-state memory, e.g., flash memory, or other storage media known in the art. Thus, any of the functionality performed by any computing system described herein, such as the method 50, is implemented in software code or instructions which are tangibly stored on a tangible computer readable medium. The computing system loads the software code or instructions via a direct interface with the computer readable medium or via a wired and/or wireless network. Upon loading and executing such software code or instructions by the computing system, the computing system may perform any of the functionality of the computing system described herein, including any steps of the method 50 described herein.

This written description uses examples to disclose the technology, including the best mode, and also to enable any person skilled in the art to practice the technology, including making and using any devices or systems and performing any incorporated methods. The patentable scope of the technology is defined by the claims.

## Claims

1. A system for detecting and addressing an unsafe working condition, the system comprising:
an agricultural machine structured to operate over a work surface;
a proximity sensor (34) mounted to the agricultural machine and structured to generate a proximity sensor signal indicative of a presence of an obstacle within a dynamic zone of operation of the agricultural machine; and
a safety control system (38) configured to receive the proximity sensor signal and execute a safety action based upon the proximity sensor signal, wherein the safety control system is further configured to adjust the dynamic zone of operation based upon an object detection confidence measure.

2. The system of claim 1, wherein the safety action is one of
- issuance of a sensory alert including at least one of an audible alert and a visual alert; and
- generation of a stop motion signal representing a command to the agricultural machine to stop motion.

3. The system of any preceding claim, wherein the system is further configured to adjust the dynamic zone of operation based on at least one of
- a system confidence measure; or
- an environmental confidence measure.

4. The system of any preceding claim, wherein the object detection confidence measure includes a signal indicative of a confidence in which an object is identified and the object detection confidence measure includes a confidence measure variable having a first state indicating that the obstacle is a person and a second state indicating the obstacle is not a person.

5. The system of any preceding claim, wherein the dynamic zone of operation includes a plurality of dynamic zones of operation, and wherein the proximity sensor signal indicates information useful to determine which of the plurality of dynamic zones of operation the obstacle is within.

6. The system of claim 5, wherein the plurality of dynamic zones of operation includes a hazard zone (42) and a warning zone (40), and wherein the hazard zone prohibits operation of the agricultural machine when a person is detected within the hazard zone.

7. The system of any preceding claim, wherein the proximity sensor (34) includes a plurality of proximity sensors (34a, 34b, 34c), and wherein the plurality of proximity sensors includes at least one of one or more cameras, one or more radars, one or more LIDAR sensors, or one or more ultrasonic sensors.

8. The system of any preceding claim, wherein the system further comprises a work vehicle (12) having a prime mover (24) and adapted to convey an agricultural implement (10).

9. The system of claim 8, wherein the proximity sensor (34) is mounted to the work vehicle (12) and wherein the dynamic zone of operation includes a plurality of dynamic zone of operations.

10. The system of any of claim 8 or 9, which further includes the agricultural implement (10) and wherein the dynamic zone of operation is defined around the work vehicle (12) and the agricultural implement.

11. The system of claim 8 when depending on at least claim 3, wherein the environmental confidence measure includes a signal indicative of a surface condition of a terrain over which the work vehicle (12) is operating.

12. The system of claim 9 when depending on at least claim 7, wherein the safety control system (38) includes a fused sensor signal representative of content from a first proximity sensor (34a) of the plurality of proximity sensors combined with content from a second proximity sensor (34b) of the plurality of proximity sensors.

13. A method for operating an agricultural machine in a presence of obstacles, the method comprising:
moving the agricultural machine (12) over a work surface;
generating a proximity sensor signal from a proximity sensor (34), the proximity sensor signal indicating the presence of an obstacle within a dynamic zone of operation of the agricultural machine;
initiating a safety action based upon the proximity sensor signal; and
adjusting the dynamic zone of operation of the agricultural machine based upon an object detection confidence measure characterizing an operating state of the agricultural machine.

14. The method of claim 13, wherein the dynamic zone of operation of the agricultural machine (12) includes a plurality of dynamic zone of operations, which further includes changing a content of the proximity sensor signal when the obstacle moves from a first dynamic zone of operation of the plurality of dynamic zone of operations to a second dynamic zone of operation of the plurality of dynamic zone of operations and further includes issuing a motion stop command when the obstacle moves from the first dynamic zone of operation to the second dynamic zone of operation.

15. The method of claim 13 or 14, wherein the adjusting the dynamic zone of operation of the agricultural machine (12) is also based upon: a system operation confidence, and an environmental condition confidence, and wherein the adjusting is based upon the plurality of confidence measures.
